# FASCICULE DE BREVET EUROPEEN

(11) **EP 1 147 460 B1**
(45) Date de publication et mention de la délivrance du brevet: **08.04.2009**
(21) Numéro de dépôt: 00965719.8
(22) Date de dépôt: 19.10.2000
(51) Int. Cl.: G05D 1/00

(54) **COMMANDE A DISTANCE D'UN VEHICULE**
FERNSTEUERUNG EINES FAHRZEUGS
VEHICLE REMOTE CONTROL

(30) Priorité: 22.10.1999 EP 99810967
(43) Date de publication de la demande: 24.10.2001
(73) Titulaire: Innosuisse Development AG, 3280 Murten (CH)
(72) Inventeur: PITTET, Bertrand, CH-1740 Neyruz (CH)
(74) Mandataire: AMMANN PATENTANWÄLTE AG BERN
(86) Numéro de dépôt international: PCT/CH2000/000566
(87) Numéro de publication internationale: WO 2001/031413

(56) Documents cités:
- DE-A- 19 800 352
- GB-A- 2 298 931
- US-A- 4 421 486
- US-A- 5 138 555
- US-A- 5 240 207
- US-A- 5 610 815
- HALME A ET AL: "Applying telepresence and augmented reality to teleoperate field robots" ROBOTICS AND AUTONOMOUS SYSTEMS,NL,ELSEVIER SCIENCE PUBLISHERS, AMSTERDAM, vol. 26, no. 2-3, 28 février 1999 (1999-02-28), pages 117-125, XP004159056 ISSN: 0921-8890 cité dans la demande

## Description

La présente invention concerne un système de commande à distance d'un véhicule par téléprésence selon le préambule de la revendication 1.

Des commandes à distance simples ou élémentaires de ce genre sont connues par exemple de GB-A-2, 212, 465. Dans ces commandes à distance connues la caméra vidéo est montée dans une position fixe sur le véhicule à commander. Les expériences pratiques avec ces commandes à distance connues sont peu satisfaisantes. Si par exemple, on veut faire tourner le véhicule commandé autour d'un obstacle, ce dernier disparaît du champ de vision de l'objectif de la caméra avant même que le pilote n'amorce le virage. Par conséquent, il est impossible de savoir exactement où, quand et comment le virage pour contourner l'obstacle doit être pris.

On connaît aussi un véhicule d'inspection décrit dans le brevet US-5,350,033. Ce véhicule porte une caméra vidéo dont l'orientation peut être commandée à distance de sorte à pouvoir diriger ladite caméra vers des objets à inspecter. Cependant, cette commande ne correspond pas du tout à une commande automatique qui soit fonction de l'orientation visuelle du pilote.

Bien que situé à distance du véhicule commandé, le pilote a l'impression de se trouver à l'intérieur de celui-ci. L'invention est basée sur la constatation qu'il n'est pas suffisant au pilote qui se déplace en voiture automobile ou en avion de ne bouger que ses yeux pour voir tous les détails nécessaires à un pilotage parfait, mais qu'à cette fin, il lui faut faire un mouvement de la tête. C'est le cas, par exemple, lorsque le pilote veut regarder l'image dans le rétroviseur. Par conséquent, la commande à distance selon l'invention doit satisfaire la condition de synchronisation entre les orientations de la caméra et de la tête du pilote, qu'en d'autres termes, l'image transmise étant observée au moyen d'un écran porté par le pilote, l'orientation de la caméra soit continuellement asservie par l'orientation de la tête du pilote situé à distance. L'image transmise au pilote correspond donc à l'image que verrait le pilote s'il se trouvait dans le véhicule.

L'état technique actuel de la présente invention appliquée à la robotique et au système autonome a été décrit dans une revue scientifique (ELSEVIER, Robotics and Autonomous Systems 26 (1999), pages 117 à 125). L'expérience a confirmé que le pilote tourne automatiquement sa tête dans l'orientation visuelle convenable dans chaque situation particulière, de sorte que la caméra commandée à distance est également tournée dans cette direction. En fait, comme évoqué plus haut, il s'agit d'un principe de synchronisation entre les mouvements naturels de la vue et un système de caméra mobile embarquée à bord d'un véhicule avec un maintien constant de l'image dans le champ visuel du pilote. Par "mouvements naturels de la vue" il est entendu: les mouvements de la tête et/ou des yeux nécessaires à une vision dite normale. Selon ladite revue ELSEVIER, on a relevé, dans les systèmes connus, des délais considérables entre les déplacements de l'orientation visuelle du pilote et les déplacements de la caméra. Ces délais dans la mesure et la transmission des signaux de commande proviennent plus particulièrement de la digitalisation des informations. Les problèmes majeurs qui en découlent dans les systèmes connus sont:
1. le malaise du simulateur, communément appelé Simulator Sickness ou (SS) et
2. la faible vitesse d'évolution possible avec les systèmes de téléprésence actuels (7 à 8 km/h en général avec des vitesses de pointe inférieures à 28 km/h).

Les tentatives entreprises sur les commandes à distance connues pour remédier à ces problèmes majeurs inhérents à la téléprésence sont restées vaines.

Le but de la présente invention est de supprimer le malaise du simulateur (Simulator Sickness - SS) et d'augmenter sensiblement les vitesses d'évolution des véhicules. Ce but est atteint grâce à l'apport d'une amélioration considérable au système actuel de commande à distance d'un véhicule par téléprésence telle que définie dans la partie caractérisante de la revendication 1.

Les résultats obtenus à ce jour, lors de différents essais de la commande selon la présente invention, ont permis de confirmer que les délais de mesure des orientations visuelles et des mouvements de la tête et/ou de transmissions de commandes sont extrêmement faibles, à tel point qu'on peut les considérer comme nuls, puisqu'ils sont de l'ordre de grandeur de la milliseconde. Ces valeurs de délais sont, par rapport à la perception humaine et aux limites mécaniques des véhicules utilisés pour la téléprésence, imperceptibles. Grâce à ces délais très faibles, le phénomène du Simulator Sickness SS disparaît et le véhicule commandé à distance peut évoluer à une vitesse sensiblement supérieure à celle que permettent les commandes à distance de l'art antérieur. De fait, lors des essais précités, les vitesses du véhicule avoisinaient les 100 km/h.

Ainsi qu'il a été dit plus haut, l'inventeur a pu constater, à la suite des essais pratiqués, que le phénomène du SS est lié aux délais dans les commandes. Mais il est apparu difficile de définir une valeur pour ces délais à partir de laquelle le SS se manifeste, car cela dépend de la sensibilité de chaque individu. En revanche, il a pu être établi que la diminution des délais entraîne une diminution du phénomène du SS. Selon l'invention, la valeur de ces délais doit être inférieure à 100 ms, de préférence inférieure à 50 ou même 10 ms. Cela est possible en particulier grâce aux caractéristiques suivantes:
1. Des délais quasi nuls dans la mesure de l'orientation visuelle du pilote et dans la détection de l'orientation de l'axe visuel du pilote.
2. Des délais quasi nuls dans la transmission des commandes contrôlant l'orientation et les mouvements de la caméra embarquée.

On a constaté qu'il est particulièrement important de diminuer le délai entre le début d'un changement de l'orientation visuelle et/ou d'un mouvement de la tête du pilote et le début du changement correspondant du signal de commande agissant sur les servos de la caméra. Mais la vitesse ou l'accélération avec laquelle les mouvements de la caméra sont amorcés importe moins. Ces conditions favorables sont réalisées par un système avec les caractéristiques de la revendication 1.

Dans ce qui suit, l'invention sera expliquée plus en détail à l'aide d'un exemple d'exécution préférentiel représenté schématiquement dans le dessin où:
La Fig. 1 représente le poste de pilotage,
la Fig. 2 représente le véhicule commandé et
les Fig. 3 et 4 montrent un système de mesure de d'orientation de la tête du pilote.
La Fig. 5 est un schéma - bloc représentant tout les constituants importants de la commande a distance.

Dans l'exemple, il s'agit de commander à distance une voiture de course 1. Le pilote se trouve dans un poste de pilotage statique 2 dans lequel tous les éléments de commande, en particulier le volant 3 et les pédales (non-représentées), et/ou toutes autres fonctions sont installés au moins approximativement selon les dimensions et positions correspondant à la réalité. Le pilote porte un casque 4 dans lequel est incorporé un écran 5, et un câble flexible 6 est disposé entre le casque 4 et un système de mesure incorporé dans un boîtier 7 comprenant l'électronique ou la mécanique nécessaire. Le système de mesure permet de détecter l'orientation et les mouvements de la tête du pilote, en l'occurrence l'orientation visuelle, c'est-à-dire du casque 4. Les orientations et les mouvements du casque 4 du pilote sont détectés par des connexions mécaniques reliant ledit casque à des potentiomètres installés dans le boîtier 7. Lesdits potentiomètres constituent des capteurs et correspondent en fait à ceux que l'on trouverait dans une télécommande de modéliste pour piloter à distance des modèles réduits. Ces capteurs analogiques (potentiomètres électriques) sont donc reliés à une télécommande de modéliste, laquelle se charge de traiter ces informations et de les transmettre au système de réception se trouvant dans le véhicule télécommandé 1.

L'émetteur de modéliste transmet les informations nécessaires par une antenne émettrice 8 située sur la station de pilotage statique 2 à une antenne réceptrice 9 de la voiture 1. Il s'agit, d'une part, de la commande à distance proprement dite, c'est-à-dire de la transmission des positions du volant 3, des pédales et autres commandes, et, d'autre part, des informations concernant l'orientation de la caméra ou de la tête du pilote, donc du casque 4.

Comme on l'a dit, la voiture 1 comporte tous les éléments de commande nécessaires à son pilotage. Ce système de commande à distance d'une voiture ou de n'importe quel autre véhicule est en soi connu et ne nécessite aucune explication supplémentaire.

Sur la voiture 1 est monté un casque 10 incorporant une caméra 11. Le signal de cette caméra 11 est amplifié et transmis par une antenne 12 à une antenne réceptrice 13 du poste de pilotage 2. L'image ainsi transmise est présentée au pilote, par l'écran 5. L'orientation et les mouvements de la tête du pilote, c'est-à-dire du casque 4, sont continuellement transmis à la voiture 1, et l'orientation de l'ensemble casque 10 - caméra 11 est continuellement adaptée à l'orientation du casque 4 coiffant la tête du pilote.

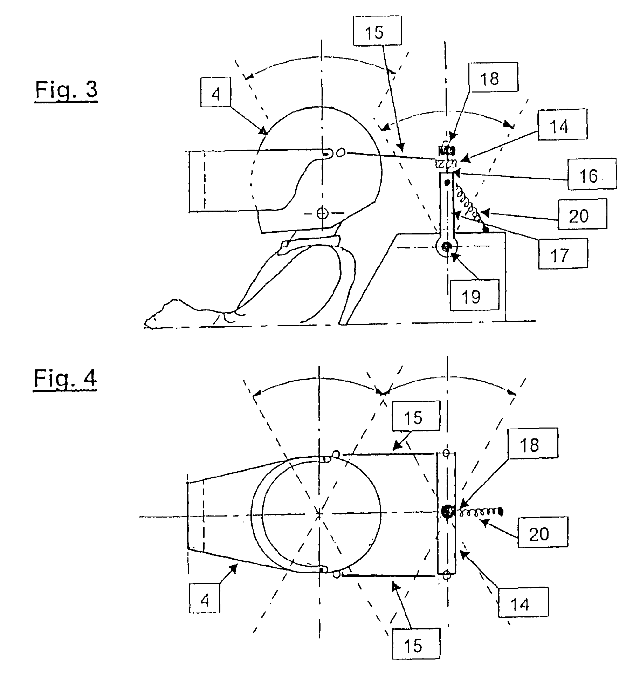

Les Figs. 3 et 4 montrent, en vue latérale et en vue de dessus respectivement, une variante du système de mesure de l'orientation de la tête du pilote. Le casque 4 est relié aux extrémités d'un levier 14 par deux cordes flexibles 15. Le levier 14 est pivotable autour d'un axe 16 fixé dans un levier 17 qui est pivotable autour d'un axe horizontal. Les leviers 14 et 17 agissent sur des potentiomètres 18 et 19 respectivement. Les mouvements de ces leviers sont ainsi transmis à l'un et l'autre de ces potentiomètres. Un ressort 20 agit sur le levier 17 pour maintenir les cordes 15 constamment sous une tension appropriée. Les orientations et les mouvements de la tête du pilote et ainsi du casque 4 autour d'un axe vertical sont transmis par les cordes 15 au levier 14 et au potentiomètre 18. Les mouvements autour d'un axe horizontal sont transmis au levier 17 et au potentiomètre 19.

Dans une variante d'exécution, le levier 17 pourrait être remplacé par un support coulissant agissant sur le potentiomètre 19 par l'intermédiaire d'une connexion mécanique.

La suppression du phénomène du SS et la possibilité de l'augmentation considérable de la vitesse d'évolution du véhicule résultent d'une approche technologique mettant en oeuvre, dans cet exemple préférentiel, un système analogique permettant de faire disparaître les délais dus à la détection de l'orientation de la tête et/ou aux transmissions desdites commandes. C'est ainsi que la présente invention apporte une amélioration considérable de la téléprésence. En fait, les seuls freins aux applications futures utilisant cette invention seront les limites mécaniques et humaines.

Cette commande à distance peut être améliorée et complétée par plusieurs moyens. On peut prévoir un système couleur à haute définition. On peut détecter et transmettre les bruits de la voiture, ce qui permet de faciliter sa commande. On peut même transmettre un son stéréo, prévoir un tableau de bord embarqué, ou ajouter un système de télémétrie et un système de vue à trois dimensions. On peut également détecter et retransmettre les vibrations, les forces et l'assiette (tangage, roulis, profondeur) agissant sur le véhicule, ou encore les sensations dans les commandes et les reproduire dans le poste de pilotage statique 2, par exemple le couple qu'il faut pour tourner le volant 3 ou les forces qu'il faut pour commander les pédales, en particulier la pédale de frein. En plus, on peut prévoir un système radar ou une caméra infrarouge ou thermique.

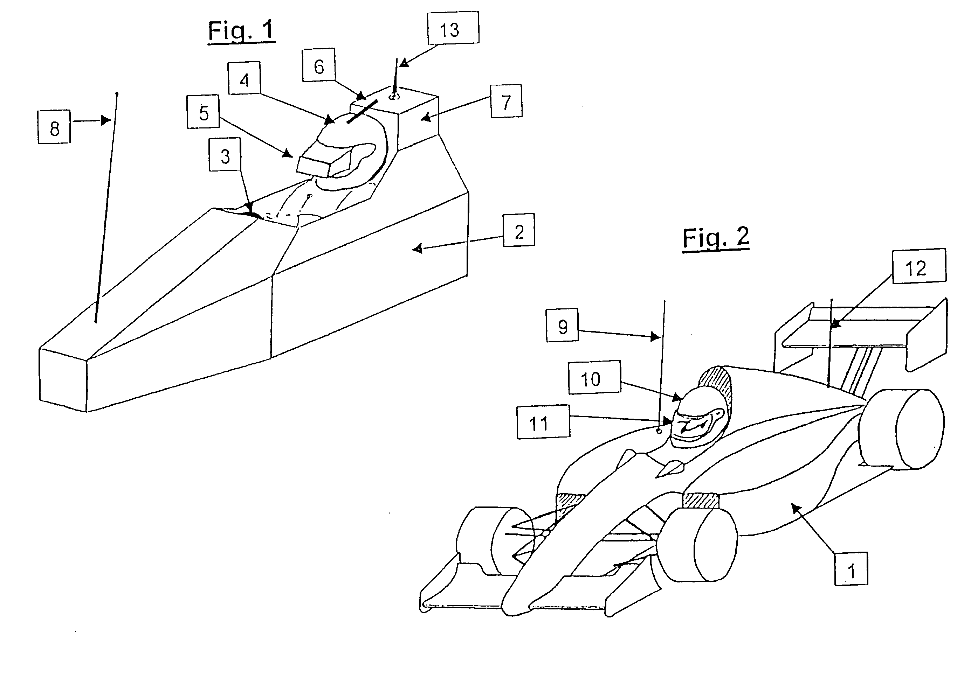

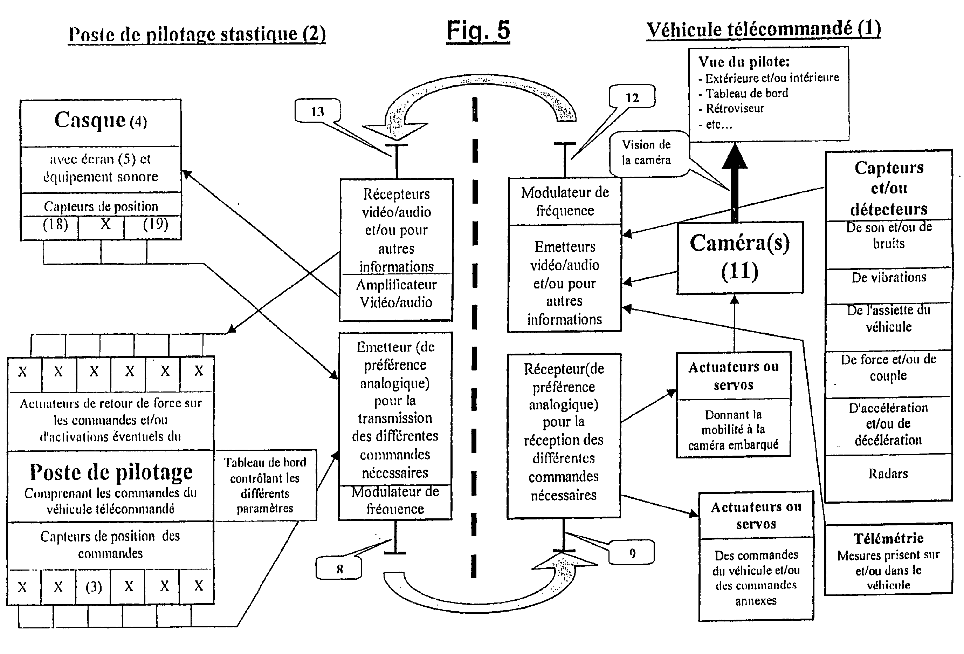

La Fig. 5 représente schématiquement la totalité des éléments essentiels de la commande à distance. Les chiffres de référence désignent les mêmes éléments que dans les Figures 1 à 4. Les indications "X" dans la partie "poste de pilotage" désignent des entrées pour les signaux correspondant aux valeurs détectées par les "capteurs et/ou détecteurs", respectivement les sorties des signaux détectés par des capteurs associés à des éléments non représentés comme l'accélérateur ou le pédale de frein.

Les applications de la commande à distance selon l'invention sont vastes. Elles se situent aussi bien dans les domaines des loisirs, professionnel, militaire, utilitaire et du secours.

Au lieu d'un écran porté par le pilote on peut prévoir un écran mobile non porté par celui-ci ou une projection mobile de façon que l'image reste en permanence dans le champ visuel du pilote.

## Revendications

1. Système de commande à distance d'un véhicule comprenant un véhicule (1) portant une caméra (11) et un émetteur d'image, une station de commande (2) avec un récepteur et un dispositif de vision (5) susceptible d'être porté ou non par un pilote et permettant au pilote d'observer l'image transmise par la caméra, des moyens pour la commande à distance du véhicule par le pilote, ainsi que des moyens pour détecter l'orientation de la tête du pilote et des servos pour commander l'orientation de la caméra,
**caractérisé en ce que**
l'orientation de la tête du pilote est détectée par des moyens électromécaniques et transmise directement en analogique depuis la station de commande (2) via une antenne émettrice (8) et une antenne réceptrice (9) jusqu'aux servos de la caméra, de sorte qu'un délai entre le début d'un changement de l'orientation de la tête du pilote et le début du changement correspondant d'un signal de commande agissant sur les servos de la caméra est réduit à moins de 50 ms.

2. Système selon la revendication 1, **caractérisé par** un casque (4) susceptible d'être porté par le pilote et deux cordes ou tiges (15) reliant ce casque à un premier levier (14) pour transmettre les mouvements du casque à ce levier, lequel est monté de façon articulée sur un deuxième levier (17) pivotant, le premier levier (14) étant mécaniquement connecté à un premier capteur (18) et le deuxième levier (17) étant mécaniquement connecté à un deuxième capteur (19) de sorte que les orientations du casque (4) autour des axes de mouvement horizontale et verticale de la tête du pilote sont mécaniquement transmises au premier et au deuxième capteur respectivement.

3. Système selon la revendication 2, characterisé en ce que les capteurs sont des potentiomètres (18, 19).

4. Système selon l'une des revendications 1 à 3, **caractérisé par** un système de transmission au poste de pilotage des bruits et des sons du véhicule.

5. Système selon l'une des revendications 1 à 4, **caractérisé par** un système de transmission des vibrations et/ou de l'assiette du véhicule et/ou les forces agissant sur le véhicule et de simulation de ces vibrations, de ladite assiette et/ou des ces forces dans le poste de pilotage (2).

6. Système selon l'une des revendications 1 à 5, **caractérisé par** un tableau de bord embarqué comprenant les instruments du véhicule.

7. Système selon l'une des revendications 1 à 6, **caractérisé par** un système de retransmission au poste de pilotage (2) des sensations perçues dans les commandes du véhicule (1).

8. Système selon l'une des revendications 1 à 7, **caractérisé en ce qu'**un système radar est monté sur le véhicule.

9. Système selon l'une des revendications 1 à 8, **caractérisé par** une caméra infrarouge ou thermique montée sur le véhicule.

10. Système selon l'une des revendications 1 à 9, **caractérisé par** un système de vue permettant une vision en 3D (trois dimensions).

11. Système selon l'une des revendications 1 à 10, **caractérisé par** un système de repérage du véhicule du genre GPS (Global Position System).

12. Système selon l'une des revendications 1 à 11, **caractérisé par** un système embarqué de télémétrie.

## Claims

1. Vehicle remote control system comprising a vehicle (1) carrying a camera (11) and an image transmitter, a control station (2) with a receiver and a viewing device (5) that is adapted to be worn by the pilot or not and allows the pilot to observe the image transmitted by the camera, means for remote control of the vehicle by the pilot, as well as means for detecting the orientation of the pilot's head and servomechanisms for controlling the orientation of the camera,
**characterised in that** the orientation of the pilot's head is detected by electromechanical means and transmitted directly in analog form from the control station (2) via a transmitting antenna (8) and a receiving antenna (9) to the servomechanisms of the camera such that a delay between the beginning of a change of the orientation of the pilot's head and the beginning of the corresponding change of a control signal acting upon the servomechanisms of the camera is reduced to less than 50 ms.

2. System according to claim 1, **characterised by** a helmet (4) for wearing by the pilot and two cords or rods (15) connecting the helmet to a first lever (14) for transmitting the movements of the helmet to that lever, which is mounted in an articulated manner on a second pivoting lever (17), the first lever (14) being mechanically connected to a first sensor (18) and the second lever (17) being mechanically connected to a second sensor (19) such that the orientations of the helmet (4) around the horizontal and vertical movement axis of the pilot's head are mechanically transmitted to the first and second sensor, respectively.

3. System according to claim 2, **characterised in that** the sensors are potentiometers (18, 19).

4. System according to any one of claims 1 to 3, **characterised by** a system for transmitting the noise and sounds of the vehicle to the control station.

5. System according to any one of claims 1 to 4, **characterised by** a system for transmitting the vibrations and/or the attitude of the vehicle and/or the forces acting on the vehicle and for simulating these vibrations, the attitude and/or these forces in the control station (2).

6. System according to any one of claims 1 to 5, **characterised by** an on-board control panel comprising the instruments of the vehicle.

7. System according to any one of claims 1 to 6, **characterised by** a system for retransmitting the sensations perceived in the controls of the vehicle (1) to the control station (2).

8. System according to any one of claims 1 to 7, **characterised in that** a radar system is mounted on the vehicle.

9. System according to any one of claims 1 to 8, **characterised by** an infrared or thermal camera mounted on the vehicle.

10. System according to any one of claims 1 to 9, **characterised by** a viewing system providing 3D (three-dimensional) vision.

11. System according to any one of claims 1 to 10, **characterised by** a GPS (Global Positioning System) type system for locating the vehicle.

12. System according to any one of claims 1 to 11, **characterised by** an on-board telemetry system.

## Patentansprüche

1. System zur Fernsteuerung eines Fahrzeugs mit einem Fahrzeug (1) mit einer Kamera (11) und einem Bildsender, einer Steuerstation (2) mit einem Empfänger und einer Betrachtungsvorrichtung (5), die vom Piloten tragbar ist oder nicht und dem Piloten gestattet, das von der Kamera übertragene Bild zu beobachten, Mitteln für die Fernsteuerung des Fahrzeugs durch den Piloten sowie Mittel zur Erfassung der Ausrichtung des Kopfs des Piloten und Servos für die Steuerung der Ausrichtung der Kamera,
**dadurch gekennzeichnet, dass**
die Ausrichtung des Kopfs des Piloten durch elektromechanische Mittel erfasst und von der Steuerstation (2) über eine Sendeantenne (8) und eine Empfangsantenne (9) direkt in analoger Form zu den Servos der Kamera übertragen wird, so dass eine Verzögerung zwischen dem Beginn einer Änderung der Ausrichtung des Kopfs des Piloten und dem Beginn einer entsprechenden Änderung eines auf die Servos der Kamera wirkenden Steuersignals auf weniger als 50 ms reduziert wird.

2. System nach Anspruch 1, **gekennzeichnet durch** einen vom Piloten tragbaren Helm (4) und zwei Seile oder Stangen (15), die den Helm mit einem ersten Hebel (14) verbinden, um die Bewegungen des Helms an diesen Hebel zu übertragen, der an einem zweiten Schwenkhebel (17) angelenkt ist, wobei der erste Hebel (14) mechanisch mit einem ersten Sensor (18) und der zweite Hebel (17) mechanisch mit einem zweiten Sensor (19) verbunden ist, so dass die Ausrichtungen des Helms (4) um die waagrechte und die senkrechte Bewegungsachse des Kopfs des Piloten mechanisch an den ersten bzw. den zweiten Sensor übertragen werden.

3. System nach Anspruch 2, **dadurch gekennzeichnet**, die Sensoren Potentiometer (18, 19) sind.

4. System nach einem der Ansprüche 1 bis 3, **gekennzeichnet durch** ein System zur Übertragung der Geräusche und Töne vom Fahrzeug zum Führerstand.

5. System nach einem der Ansprüche 1 bis 4, **gekennzeichnet durch** ein System zur Übertragung der Vibrationen und/oder der Lage des Fahrzeugs und/oder der auf das Fahrzeug wirkenden Kräfte und zur Simulation dieser Vibrationen, der Lage und/oder der Kräfte im Führerstand (2).

6. System nach einem der Ansprüche 1 bis 5, **gekennzeichnet durch** ein Armaturenbrett im Fahrzeug mit den Bordinstrumenten des Fahrzeugs.

7. System nach einem der Ansprüche 1 bis 6, **gekennzeichnet durch** ein System zur Rückübertragung der an den Steuerorganen des Fahrzeugs (1) wahrgenommenen Empfindungen zum Führerstand (2).

8. System nach einem der Ansprüche 1 bis 7, **dadurch gekennzeichnet, dass** auf dem Fahrzeug ein Radarsystem montiert ist.

9. System nach einem der Ansprüche 1 bis 8, **gekennzeichnet durch** eine auf dem Fahrzeug montierte Infrarot- oder Wärmekamera.

10. System nach einem der Ansprüche 1 bis 9, **gekennzeichnet durch** ein Sichtsystem, welches eine 3D-(dreidimensionale) Sicht gestattet.

11. System nach einem der Ansprüche 1 bis 10, **gekennzeichnet durch** ein System zur Bestimmung der Position des Fahrzeugs in der Art von GPS (Global Positioning System).

12. System nach einem der Ansprüche 1 bis 11, **gekennzeichnet durch** ein Bord-Telemetriesystem.
